# EUROPEAN PATENT APPLICATION

(11) **EP 2 607 506 A1**
(43) Date of publication of application: **26.06.2013**
(21) Application number: 12196949.7
(22) Date of filing: 13.12.2012
(51) Int. Cl.: C22B 11/02

(54) **Method for recovering platinum from aviation engine components**

(30) Priority: 22.12.2011 US 201113334810
(71) Applicant: General Electric Company, Schenectady, NY 12345 (US)
(72) Inventor: KOOL, Lawrence Bernard, Niskayuna, NY New York 12309 (US); RUCKER, Michael, Niskayuna, NY New York 12309 (US); HU, Genfa, Niskayuna, NY New York 12309 (US); ROSENZWEIG, Mark, Niskayuna, NY New York 12309 (US)
(74) Representative: Williams, Andrew Richard

(57) **Abstract**

The disclosure relates generally to methods for platinum recovery from articles. More specifically, the disclosure relates to methods for recovering platinum from gas engine components.

## Description

### BACKGROUND

This invention relates to a method for recovering platinum group elements from an article containing at least one platinum group element.

Modem gas or combustion turbines must satisfy the highest demands with respect to reliability, weight, power, economy, and operating service life. In the development of such turbines, the material selection, the search for new suitable materials, as well as the search for new production methods, among other things, play an important role in meeting standards and satisfying the demand.

The platinum group metals (PGM) or PGMs (platinum, palladium, rhodium, iridium, osmium, and ruthenium) are becoming increasingly important to the global economy. The aviation industry uses precious metals in the manufacture of aircraft engines. Gold and silver, as well as palladium and platinum, are used in the manufacture of different types of aircraft engines. Typically, an aircraft engine has up to 23 parts that contain precious metals. Various aircraft engine parts that use precious metals include vanes, stators, blades, fuel nozzles, fuel manifolds, tobi ducts, and heat exchangers. Whereas parts of an aircraft's engine turbine system and avionics system use gold and silver, the aircraft blades use platinum. This invention relates to the recovery of platinum from used aviation components.

After the life of an aircraft engine is over, the aviation industry can still recover precious metal from aircraft engines and their parts. Until recently, platinum group metals (PGM) were recovered by classical precipitation procedures, which involved many repeated precipitation/redissolution stages in order to obtain metal of the desired purity. These processes are extremely tedious and time-consuming, with metal being tied-up in process often for many months.

Yet, recovery of precious metals can account for up to 50 percent of an aircraft engine's recycling value. As such, there is a need for new and improved methods for recovering platinum group elements from an article containing at least one platinum group element, including for example new and improved methods for recovering platinum from engine turbine blades.

### SUMMARY

Aspects of the present disclosure provide for the recovery of platinum from gas turbine engine components that are being discarded or in conjunction with the removal of platinum-containing coatings therefrom during repair and reworking.

One aspect of the present disclosure is a method for recovering platinum from an gas engine component, comprising: contacting the engine component with a chemical comprising an acid; stripping the engine component, wherein said stripping comprises removing the thermal barrier control and platinum aluminide from the engine component; dissolving soluble metals out of the engine component; separating the thermal barrier control, platinum aluminide and soluble metals from the engine component; revealing a platinum-rich layer as part of the engine component; mechanically separating the platinum-rich layer from the engine component; centrifuging the platinum-rich layer; and recovering the platinum from the gas engine component.

In another aspect, the present disclosure is a method for recovering platinum from a gas engine component, comprising: contacting the engine component with a chemical comprising an acid; dissolving at least a portion of a thermal barrier coating and platinum aluminide on said engine component to expose a platinum rich layer; separating the platinum-containing layer from the thermal barrier coating and platinum aluminide; mechanically removing the platinum-containing layer from the engine component; and recovering the platinum from the platinum-containing layer by centrifugation.

In one embodiment, the gas engine component is a turbine blade. The separating the platinum-rich layer step or mechanically removing step can be accomplished by high ultrasonic treatment of the component, tumbling of the component, vibratory finishing of the component, dry ice blasting of the component, or a combination thereof. In one example, the separating the platinum-rich layer step or mechanically removing step is selected from the group consisting of hand brushing, high pressure water blasting, ultrasonic cleaning, tumbling, vibratory finishing, or a combination thereof. In another embodiment, the component is first treated in a ultrasonic bath and subsequently the component undergoes a tumbling step, vibratory finishing, or a combination thereof. This sequential approach can effectively remove any residual platinum.

In one embodiment, the separating the platinum-rich layer step or mechanically removing step is accomplished by high ultrasonic treatment of the component for a period of at least 3 hours. In another embodiment, the separating the platinum-rich layer step or mechanically removing step is accomplished by treatment of the component in an ultrasonic environment, and wherein the platinum-rich layer is dislodged from the component and a slurry is formed comprising the platinum-rich residue in water.

In one embodiment, the separating the platinum-rich layer step or mechanically removing step is accomplished by tumbling treatment of the component for a period of at least 45 minutes. In another embodiment, the separating the platinum-rich layer step or mechanically removing step is accomplished by treatment of the component in a tumbling environment, and wherein the platinum-rich layer is dislodged from the component and a slurry is formed comprising the platinum-rich residue in water.

In one aspect, the present disclosure is a method for recovering platinum from a turbine blade, comprising: dipping the turbine blade into a chemical comprising an acid; dissolving at least 50% of a thermal barrier coating or platinum aluminide on said turbine blade; exposing a platinum rich layer on said turbine blade; mechanically separating the platinum-rich layer from the turbine blade; and recovering the platinum from the platinum-rich layer by centrifugation.

These and other aspects, features, and advantages of this disclosure will become apparent from the following detailed description of the various aspects of the disclosure taken in conjunction with the accompanying drawings.

### BRIEF DESCRIPTION OF THE FIGURES

The subject matter, which is regarded as the invention, is particularly pointed out and distinctly claimed in the claims at the conclusion of the specification. The foregoing and other features and advantages of the disclosure will be readily understood from the following detailed description of aspects of the invention taken in conjunction with the accompanying drawings.
Figure 1 shows a table, indicating the amount of platinum-rich smut removed from a turbine blade stripped using GRC chemistry.
Figure 2 shows a graphic of one aspect of the platinum recovery process.
Figure 3a and 3b recite the steps for recovering platinum from an gas engine component, and Figure 3c recites the steps for recovering platinum from a turbine blade.

### DETAILED DESCRIPTION

In an aircraft gas turbine (jet) engine, air is drawn into the front of the engine, compressed by a shaft-mounted compressor, and mixed with fuel. The mixture is combusted, and the resulting hot combustion gases are passed through a turbine mounted on the same shaft. The flow of gas turns the turbine by contacting an airfoil portion of the turbine blade, which turns the shaft and provides power to the compressor. The hot exhaust gases flow from the back of the engine, driving it and the aircraft forwardly.

During operation of gas turbine engines, the temperatures of combustion gases may exceed 3,000° F, considerably higher than the melting temperatures of the metal parts of the engine, which are in contact with these gases. The metal parts that are particularly subject to high temperatures, and thus require particular attention with respect to cooling, are the hot section components exposed to the combustion gases, such as blades and vanes used to direct the flow of the hot gases, as well as other components such as shrouds and combustors.

The hotter the turbine gases, the more efficient is the operation of the jet engine. There is thus an incentive to raise the turbine operating temperature. However, the maximum temperature of the turbine gases is normally limited by the materials used to fabricate the turbine vanes and turbine blades of the turbine. Many approaches have been used to increase the operating temperature limits and operating lives of the airfoils of the turbine blades and vanes.

The metal temperatures can be maintained below melting levels with current cooling techniques by using a combination of improved cooling designs and thermal barrier coatings. In one approach, a protective layer is applied to the airfoil of the turbine blade or turbine vane component, which acts as a substrate. Among the currently known diffusional protective layers are aluminide and platinum aluminide layers. The protective layer protects the substrate against environmental damage from the hot, highly corrosive combustion gases. This protective layer, with no overlying ceramic layer, is useful in intermediate-temperature applications. For higher temperature applications, a ceramic thermal barrier coating layer may be applied overlying the protective layer, to form a thermal barrier coating (TBC) system.

Thermal barrier coatings (TBCs) are well-known ceramic coatings, for example, yttrium stabilized zirconia. Ceramic thermal barrier coatings usually do not adhere optimally directly to the superalloys used in the substrates. Therefore, an additional metallic layer called a bond coat is placed for example, by chemical vapor deposition (CVD), between the substrate and the TBC to improve adhesion of the TBC to the underlying component. In one form, the bond coat is made of a diffusion nickel aluminide or platinum aluminide, whose surface oxidizes to form a protective aluminum oxide scale in addition to improving adherence of the ceramic TBC.

Even with the use of these protective techniques, there remain problems to overcome in extending the operating service temperatures and operating lives of the turbine blade components. There is a large cost to replacing these turbine blade components, especially because of the expensive components used to manufacture such components. As a result, it is beneficial to extract particular needed components from used parts for future use in the manufacture of new parts. For example, platinum group metals (PGM) are often employed in the aviation industry. Because platinum group metals are relatively expensive and are often obtained from sources outside the United States, it is advantageous to recover platinum group metals from parts used in airplanes.

Many advanced gas turbine engine components, especially turbine blades, are coated with platinum modified diffusion aluminide coatings (PtAl). These coatings offer superior environmental protection in oxidation and Type I hot corrosion conditions within a turbine engine. As outlined above, these coatings are also employed as bond coatings beneath physically vapor deposited (PVD) thermal barrier coatings.

The Pt present in PtAl coatings is most often deposited by electroplating. To develop the required PtAl chemistry and structure, about 0.5-0.8 grams of Pt are electroplated onto relatively smaller turbine blades, while up to on the order of 1.5 grams of Pt may be electroplated onto larger blades. After plating, the Pt is incorporated into the coating by diffusion, with the final composition of the predominant coating phase being (Ni,Pt)Al.

A PtAl coating may be removed from a blade if the coating itself or some other feature of the blade does not meet the engineering or quality requirements for the part. In such a case, the coating is stripped, the part reworked and then recoated with PtAl. Turbine blades are also stripped of PtAl coatings after engine operation to enable inspection and repair of the turbine blades.

Stripping of PtAl coatings is accomplished in a variety of manners. Stripping of PtAl coatings can be accomplished by acid stripping using mineral acids such as hydrochloric, phosphoric, nitric, and mixtures of these acids. The acids react with the coating and dissolve some of the coating constituents, especially Ni. After the reaction, a thin, loosely adherent, black film residue comprising Pt, aluminum oxides and heavy metal oxides of various elements from the substrate material is left behind on the blade. After stripping a number of parts, the stripping solutions become ineffective and are discarded. Most often the acids are neutralized, the metals chemically precipitated out, and the precipitate filtered from the solution. The precipitate, although it contains minor amounts of Pt, is disposed of as solid waste.

The platinum rich residue was removed from stripped turbine blades by mechanical methods such as ultrasonic treatment or vibratory finishing. Traditionally a "cutting" type media has been used in vibratory finishing machines to remove residue. Cutting media consist of abrasive aluminum oxide particles in a soft binder. The binder breaks down, releasing aluminum oxide particles into the vibratory finish machine. Large volumes of sludge are produced. The residue is thus contaminated and diluted by the abrasive media as it breaks down, such that the Pt is no longer economically recoverable. Overflow from wet blast or vibratory finishing machines used to clean blades is treated in a wastewater system, and the solids, although they contain Pt, are disposed of as waste.

One aspect of the present disclosure is a method for recovering platinum from a gas engine component, comprising: contacting the engine component with a chemical comprising an acid; stripping the engine component, wherein said stripping comprises removing the thermal barrier control and platinum aluminide from the engine component; dissolving soluble metals out of the engine component; separating the thermal barrier control, platinum aluminide and soluble metals from the engine component; revealing a platinum-rich layer as part of the engine component; mechanically separating the platinum-rich layer from the engine component; centrifuging the platinum-rich layer; and recovering the platinum from the gas engine component.

The gas engine component can be a turbine blade. The separating the platinum-rich layer step or mechanically removing step can be accomplished by high ultrasonic treatment of the component, tumbling of the component, vibratory finishing of the component, dry ice blasting of the component, or a combination thereof. In one example, the separating the platinum-rich layer step or mechanically removing step is selected from the group consisting of hand brushing, high pressure water blasting, ultrasonic cleaning, tumbling, vibratory finishing, or a combination thereof. In another embodiment, the component is first treated in a ultrasonic bath and subsequently the component undergoes a tumbling step, vibratory finishing, or a combination thereof. This sequential approach can effectively remove any residual platinum.

The high ultrasonic treatment of the component can be for a period of at least 3 hours. In one embodiment, the ultrasonic treatment of the component is for a period of between 3 hours to 8 hours. In another embodiment, the ultrasonic treatment of the component is for about 12 hours. In another embodiment, the separating the platinum-rich layer step or mechanically removing step is accomplished by treatment of the component in an ultrasonic environment, and wherein the platinum-rich layer is dislodged from the component and a slurry is formed comprising the platinum-rich residue in water.

The tumbling treatment of the component can be for a period of at least 45 minutes. In one embodiment, the tumbling treatment is for a period between 30 minutes and 300 minutes. In one embodiment, the tumbling treatment is for a period between 60 minutes and 180 minutes. In another embodiment, the tumbling treatment is for about 120 minutes. In one embodiment, the separating the platinum-rich layer step or mechanically removing step is accomplished by treatment of the component in a tumbling environment, and wherein the platinum-rich layer is dislodged from the component and a slurry is formed comprising the platinum-rich residue in water.

A PtAl coating may be removed from a blade if the coating itself or some other feature of the blade does not meet the engineering or quality requirements for the part. In such a case, the coating is stripped, the part reworked and then recoated with PtAl. Turbine blades are also routinely stripped of PtAl coatings after engine operation to enable inspection and repair of the turbine blades.

In situations where PtAl coatings are removed mechanically by abrasive grit blasting, rather than chemically, Pt-bearing debris from grit blasting is filtered from the process air and is disposed of as solid waste. By one of the above processes, the Pt from the PtAl stripping operation finds its way into the final waste stream of a turbine blade repair plant. Many high volume operations feed into the final waste stream in a manufacturing plant and dilute the concentration of Pt in the solid waste to the point where it is not economically viable to recover the precious metal.

In certain embodiments, the PtAl bondcoat is removed from the turbine blade by means of a chemical stripping process. This process dissolves aluminum and other metals from the PtAl coating, leaving behind a platinum-rich smut. In one embodiment, the disclosure describes a new and improved method for mechanically removing this smut, including ultrasonics, vibrations, and dry-ice blasting, and recovering the smut quantitatively by means of centrifugation. The presently disclosed method is also applicable to end-of-life parts.

In one aspect, the present disclosure is a method for recovering platinum from a gas engine component, comprising: contacting the engine component with a chemical comprising an acid; dissolving at least a portion of a thermal barrier coating and platinum aluminide on said engine component to expose a platinum rich layer; separating the platinum-containing layer from the thermal barrier coating and platinum aluminide; mechanically removing the platinum-containing layer from the engine component; and recovering the platinum from the platinum-containing layer by centrifugation.

In one embodiment, different chemicals are used for leaching aluminum. In another embodiment, different methods are used for mechanically removing the smut and/or recovering the fine powdered platinum-rich smut. Prior to the teachings of the present disclosure, removal of the platinum-rich smut was carried out by means of aluminum oxide grit blasting to provide a clean airfoil surface. In this process the platinum was incorporated into the spent grit blasting material and significantly diluted. This spent grit was then classified as hazardous waste and had to be disposed of accordingly at great expense.

Applicants have identified a chemical stripping process to leach out the soluble metals (primarily aluminum) while leaving behind a platinum-rich "smut." Further, Applicants' disclosure teaches a new and improved method by which this platinum-rich smut can be removed without contamination of the smut by foreign materials. In one embodiment, a vibratory tumbler with ceramic media and water results in complete, satisfactory removal of the smut and the formation of a fine suspension of platinum smut in water. This water is then introduced into a continuous high speed centrifuge (CEPA) which separates the smut from the water to provide a product that is >45 wt% platinum. In one embodiment, the disclosed process allows for the recovery of the platinum from the coatings quantitatively.

Prior attempts to recover platinum have involved dissolving the platinum in very strong acids, then neutralizing the acid to precipitate platinum salts, which were highly contaminated; this process is not particularly viable for commercial use. In contrast, in one aspect, the present disclosure is a method for recovering platinum from a turbine blade, comprising: dipping the turbine blade into a chemical comprising an acid; dissolving at least 50% of a thermal barrier coating or platinum aluminide on said turbine blade; exposing a platinum rich layer on said turbine blade; mechanically separating the platinum-rich layer from the turbine blade; and recovering the platinum from the platinum-rich layer by centrifugation. U.S. Patent Numbers 6,494,960, 5,976,265, and 5,486,135 and application numbers 2003/005020, 2002/010309, and 2002/0072306 provide additional alternatives and are incorporated herein.

In one embodiment, the disclosure is directed to mechanical removal of platinum-rich smut from airfoils that have been treated using chemical stripping methods. Applicants teach that these mechanical methods include an ultrasonic bath, tumbling with media, vibratory finishing, water jets, brushes, compressed air, dry-ice blasting and the like. In another embodiment, the present disclosure is directed to recovery of the fine platinum power by filtration, centrifugation, settling, decanting, or a combination thereof.

The advantages of the present disclosure include the reduced loss of valuable platinum metal and the avoidance of the cost of disposal of used grit blasting media that is contaminated with platinum and other metals. In addition, in order to practice the present disclosure, in one embodiment, conventional chemical stripping processes already in place and approved by the FAA can be used. Moreover, as mentioned *supra,* by practicing the presently disclosed method, the cost of disposal of spent grit blast media as hazardous waste is avoided and valuable platinum metal is recovered and can be recycled.

Grit blasting is a common method to clean dirt and remove coatings. Unfortunately, grit blasting does not clean dirty or blocked internal passageways. Grit blasting can damage the base alloy thereby thinning airfoil walls. Chemical solutions are used for cleaning dirt and stripping coatings from gas turbine components.

A first class of stripping compositions (composition (i)) comprises aliphatic or aromatic sulfonic acids. Examples of suitable aliphatic sulfonic acids are methanesulfonic acid (MSA) and ethanesulfonic acid, with methanesulfonic acid being preferred. Illustrative aromatic sulfonic acids are benzene sulfonic acid, toluene sulfonic acid, and naphthalene sulfonic acid. In a particular embodiment, stripping of the turbine blade is performed by using a composition comprising an aliphatic sulfonic acid such as MSA, ethanesulfonic acid, methanesulfonic acid, or a combination thereof.

A second class of stripping compositions (i.e., composition (ii)) includes a solution of an inorganic acid and an organic solvent. Examples of the inorganic acid for this class of compositions are hydrochloric acid, nitric acid, and perchloric acid.

In certain embodiments, the solvent is one which reduces the activity and increases the wetting capability of the inorganic acid relative to the substrate. (The chemical interaction between an acid and a hydrocarbon solvent will often differ from the interaction between the acid and a solvent like water). It has been found that the combination of the inorganic acid and the organic solvent removes substantially all of the aluminide coating material without adversely affecting the substrate.

Examples of organic solvents for use in combination with the inorganic acid include aliphatic alcohols, aromatic alcohols, chlorinated alcohols, ketones, nitrile-based solvents, nitrated hydrocarbon solvents, nitrated aromatic solvents such as nitrobenzene; chlorinated hydrocarbons, amines, and mixtures of any of the foregoing. Several specific examples of the aliphatic alcohols are methanol, ethanol, and isopropanol. Mixtures of alcohols may be used as well. Specific examples of the aromatic alcohols are phenols and substituted phenols.

A third stripping composition for this invention (composition (iii)) comprises sulfuric acid or an aqueous solution of sulfuric acid. For the aqueous solution, the ratio of acid to water is usually in the range of about 10:90 to about 65:35. In certain embodiments, the ratio is in the range of about 15:85 to about 40:0. Moreover, a wetting agent is usually used in this type of stripping composition, as described below.

For end use applications in which minimal pitting of the substrate if any is preferred, a different stripping composition could be employed. For example, methanesulfonic acid is effective at removing aluminide material from the substrate, although the rate of removal is not as high as in the case of HCl-alcohol. A distinct advantage of methanesulfonic acid is that it does not adversely affect the substrate to any substantial degree, beyond uniform corrosion. As used herein, "uniform corrosion" refers to the removal of a thin layer of the substrate - usually less than about 2 microns in thickness.

In some embodiments, the stripping composition further includes a wetting agent. The wetting agent reduces the surface tension of the composition, permitting better contact with the substrate and the aluminide-based coating. Illustrative wetting agents are polyalkylene glycols, glycerol, fatty acids, soaps, emulsifiers, and surfactants. The wetting agent is usually present at a level in the range of about 0.1% by weight to about 5% by weight, based on the total weight of the composition.

Other additives are sometimes used in the stripping composition. For example, inhibitors are sometimes employed to lower the proton concentration, and thereby lower the activity of the acid in the composition. The lowered activity in turn decreases the potential for pitting of the substrate surface. An exemplary inhibitor is a solution of sodium sulfate in sulfuric acid, or a solution of sodium chloride in hydrochloric acid. The level of inhibitor used is usually about 1 % by weight to about 15% by weight, based on the weight of the entire stripping composition. Moreover, oxidizing agents are sometimes used in the stripping composition to prevent the formation of a reducing environment. Examples include peroxides (*e.g.*, hydrogen peroxide), chlorates, perchlorates, nitrates, permanganates, chromates, and osmates (*e.g.*, osmium tetroxide). The level of oxidizing agent used is usually about 0.01% by weight to about 5% by weight, based on the weight of the entire stripping composition. In one embodiment, the oxidizing agent is used with acids that are reducing agents, *e.g.* hydrochloric acid.

The particular stripping composition may be applied to the substrate in a variety of ways. For example, it can be brushed or sprayed onto the surface. Very often, immersion of the substrate in a bath of the stripping composition is the most practical technique. The bath can be maintained at a temperature below about 170° F. (77° C.) while the substrate is immersed therein. In a particular embodiment, the bath is maintained at a temperature below about 130° F. (54° C.). The process could be carried out at room temperature, although a higher temperature range would usually be maintained to ensure process consistency if the room temperature is variable. Higher temperatures (within the boundaries set forth above) sometimes result in more rapid removal of the aluminide coating.

The baths containing the stripping compositions are often stirred or otherwise agitated while the process is carried out, to permit maximum contact between the stripping agent and the coating being removed. A variety of known techniques could be used for this purpose, such as the use of impellers, ultrasonic agitation, magnetic agitation, gas bubbling, or circulation-pumping. Immersion time in the bath will vary, based on many of the factors discussed above. On a commercial scale, the immersion time will usually range from about 15 minutes to about 400 minutes. In some embodiments, the immersion time will be a period less than about 150 minutes. In particular embodiments, the immersion time will be a period less than about 75 minutes. Exposure to the stripping composition causes the aluminide coating on the surface of the substrate to become degraded.

In some embodiments of the present disclosure, the substrate surface is contacted with two stripping compositions, in sequence. The first composition is one which very quickly begins to remove the aluminide materials. A specific example is the mixture of the inorganic acid and the solvent which reduces the activity of the inorganic acid relative to the substrate, as described previously. Illustrative compositions of this type are hydrochloric acid with an alcohol such as ethanol; and sulfuric acid with water.

The second stripping composition is one which is capable of removing the aluminide material more slowly, and with no pitting or attack on the substrate, except for the possible occurrence of uniform corrosion, as discussed previously. One example is the stripping composition based on an alkane sulfonic acid, such as methanesulfonic acid.

Typically, each stripping composition is used in the form of a bath in which the substrate can be immersed. Contact times and bath temperatures will vary, based on many of the factors described previously, *e.g.,* type and amount of aluminide material requiring removal. Usually, the first bath will be maintained at a temperature in the range of about 0° C. to about 40° C., with an immersion time between about 5 minutes and about 30 minutes. The second bath will typically be maintained at a temperature in the range of about 40° C. to about 60° C., with an immersion time between about 30 minutes and about 300 minutes. As in previous embodiments, the surface can then be subjected to a gentle abrasion step (or similar technique) to remove the degraded coating, *e.g.,* by light grit-blasting.

The present disclosure relates generally to platinum recovery and methods for recovering platinum from aviation components, including engine turbine blades.

### EXAMPLES

The disclosure, having been generally described, may be more readily understood by reference to the following examples, which are included merely for purposes of illustration of certain aspects and embodiments of the present disclosure, and are not intended to limit the disclosure in any way.

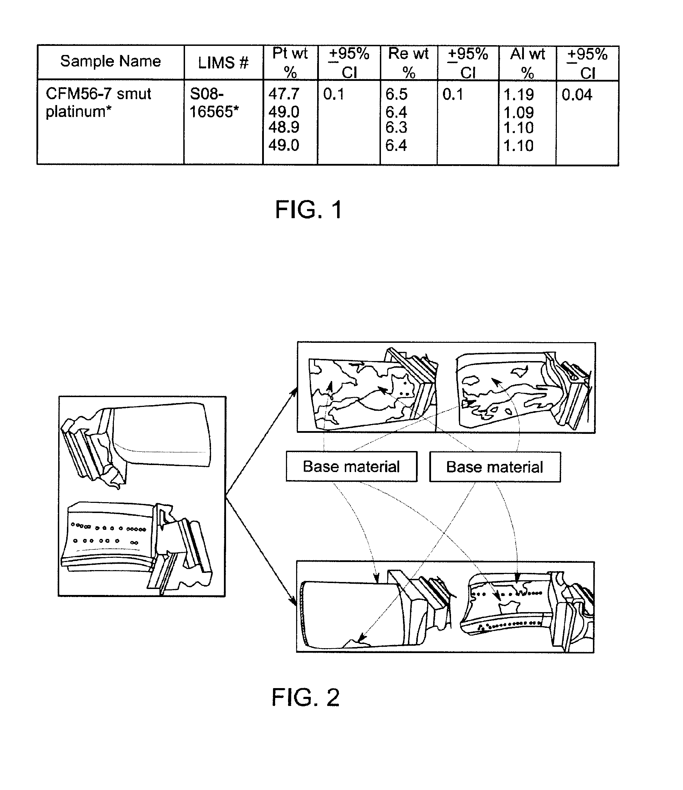

Figure 1 is a table, showing platinum-rich smut removed from a turbine blade stripped using GRC chemistry. The CFM56-7 blade was stripped using GRC chemistry, the smut was removed in an ultrasonic bath, and filtered through Whatman #4 fluted filter. The isolated yield was 1.5g.

Figure 2 shows a graphic of one aspect of the platinum recovery process.

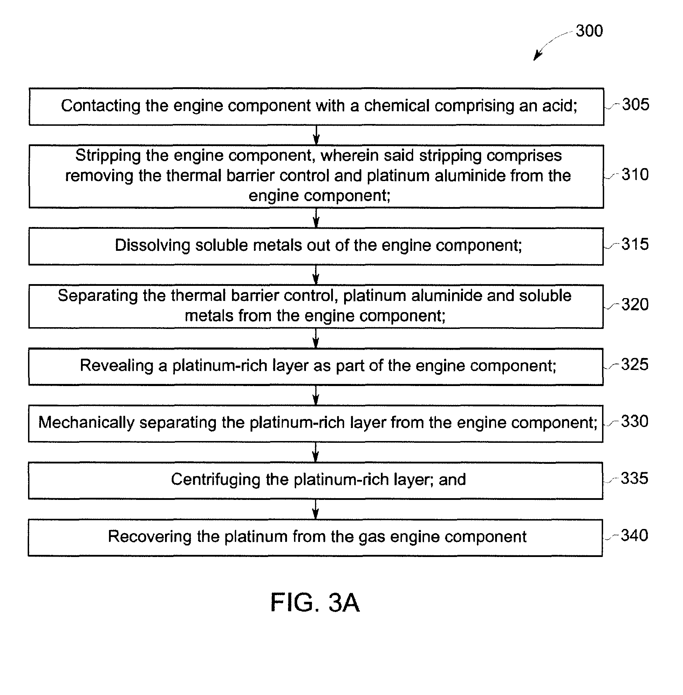

As shown in Figure 3a, the method for recovering platinum from an gas engine component, comprises contacting the engine component with a chemical comprising an acid (305). The engine component is stripped, removing the thermal barrier control and platinum aluminide from the component (310). Having dissolved the soluble metals out of the engine component (315), the thermal barrier control, platinum aluminide and soluble metals are separated from the engine component (320), revealing a platinum-rich layer as part of the engine component (325). The platinum-rich layer is then mechanically separated from the engine component (330), centrifuged (335) and the platinum is recovered from the engine component (340).

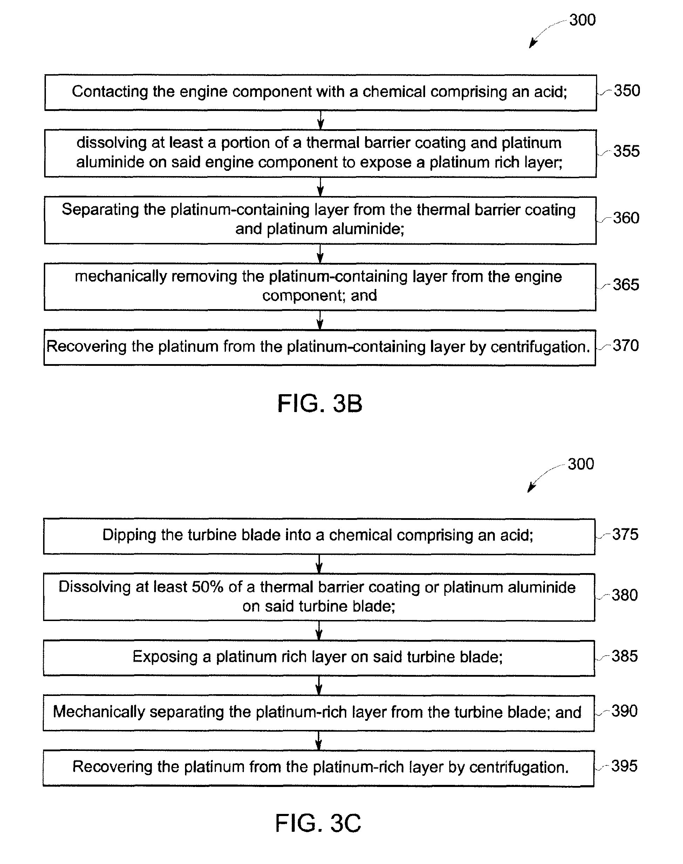

In another example, shown in Figure 3b, the method for recovering platinum from a gas engine component, comprises contacting the engine component with a chemical comprising an acid (350). At least a portion of a thermal barrier coating and platinum aluminide that is on said engine component is dissolved to expose a platinum rich layer (355). This platinum-rich layer is separated from the thermal barrier coating and platinum aluminide (360). Having mechanically removed the platinum-rich layer from the engine component (365), the platinum is recovered from the platinum-rich layer by spinning down the slurry (370).

In another embodiment, shown in Figure 3c, the method for recovering platinum from a turbine blade comprises dipping the turbine blade into a chemical comprising an acid (375), and dissolving at least 50% of a thermal barrier coating or platinum aluminide that is on the turbine blade (380). Once the platinum-rich layer is exposed on the turbine blade (385), it is then mechanically separated from the turbine blade (390), and the platinum-rich layer is recovered by centrifuging the slurry containing the platinum-rich layer (395).

In a first example, lab-scale experiments were conducted to determine whether platinum could be recovered in the form of "smut" that remains on stripped blades after PtAI-coated airfoils have been run through the chemical stripping process. Applicants conceived that platinum can be recoverable after this stripping step because the stripping chemicals function by dissolving aluminum from the PtAI, leaving behind a loosely-adherent platinum "smut."

Individual blades were stripped in the laboratory using two different stripping chemistries, one of which being using the MSA. The stripped blades were then desmutted in a lab-scale ultrasonic bath and the resultant suspension was filtered via gravity through filter paper. A CFM56-7 stage 1 blade afforded 1.5 g of recovered material that was submitted for ICP analysis. CFM56-7 blades were used because they are representative of a type of blade that has PtAl coating and are commonly repaired. The results of this analysis are shown in Figure 1 and indicate that the smut consisted of 47-49% platinum.

A 5 g sample of this material was analyzed and found that the material contained ">40%" platinum, far exceeding the 25% limit for customers' favorable processing costs.

A full-scale study on a set of 24 blades was conducted. The turbine blades were stripped using the conventional MSA stripping bath. Subsequently, two different methods of platinum rich smut removal were performed in place of grit blasting: an ultrasonic bath and tumbling (see Figure 2).

Although it appears that tumbling or vibratory finishing provide more complete removal of smut, the method suffers from the drawback that the recovered smut is contaminated (>80%) with ceramic particulate caused by abrasion of the ceramic tumbling media. The smut recovered from the ultrasonic desmutting operation was uncontaminated by tumbling media.

Thus, not all methods for desmutting the turbine blades provide similar results. Applicants have discovered, in part, that there is an advantage to using ultrasonic desmutting as compared to other removal methods. Further, Applicants discovered that more vigorous ultrasonic desmutting provides for better platinum recovery and in a shorter period of time. A variety of methods for smut removal are available. Ultrasonic bath, tumbling and vibratory finishing all can be used, either alone or in combination. If tumbling or vibratory finishing are used, the resultant product can be contaminated with ceramic media material that is abraded away during the process. The method selected is dependent upon the purity requirements of the subsequent purification steps. Ultrasonic baths typically produce the purest product, but some residual platinum may adhere to the airfoils. This residual platinum can be effectively removed in a subsequent tumbling or vibratory finishing step.

In a second experiment, modifications to the configuration of the ultrasonic bath were made to enhance smut removal. This resulted in ca. 80% removal of smut (based upon visual estimation). The ultrasonic bath used for Pt smut removal was one of a variety of commercially-available ultrasonic baths using a varying, sweeping frequency. Higher ultrasonic bath energy and a higher bath volume to part surface area ratio results in shorter cycle times; lower bath energy with a lower bath volume to part surface area ratio requires longer cycle times. Desmutting cycles can range from a few minutes to 45 minutes, depending on bath volume, number of parts and ultrasonic energy. The resultant suspension was filtered via gravity using a fluted Whatman filter paper of medium porosity. Higher porosity (faster) results in shorter cycle and lower yield, while lower porosity (slower) results in higher yield and longer cycle time.

Closer examination of the filtration recovery method revealed that the smut became embedded in the bag, making ultimate recovery challenging. As a result, Applicants identified alternative methods to recover fine particulates dispersed in a relatively large volume of liquid. Applicants identified a method that provides smut free of contamination. This method employs the CEPA highspeed continuous centrifuge, providing quantitative recovery of platinum smut that is ca. 50% platinum by weight.

Applicants also considered alternatives to ultrasonic desmutting followed by continuous centrifuging. In one embodiment, Applicants identified dry-ice blasting as an alternative. Dry-ice blasting is a process whereby dry-ice (solid carbon dioxide) is ejected at high velocity from a nozzle and used to remove the smut from the blades. A wide range of velocities, particle sizes and particle velocities may be used. In general, a higher energy particle can more effectively remove smut, but at higher cost. The advantage of this method is that it might be possible to combine the smut removal and recovery processes. This method may require the design and construction of a dry-ice blasting booth that would be connected to a dust collector that would trap the smut that was removed. Applicants have established that either method of recovery (ultrasonic desmutting followed by continuous centrifugation or dry-ice blasting with dust collection) would efficiently remove platinum smut.

The advantages of the presently taught disclosure is that it provides for improved methods for recovering the value of the recovered platinum, 0.5 - 1.5 g Pt/blade (depending on engine). Platinum spot price is approximately $1600/oz; value per blade is therefore about $25 - $100. Since the present assignee produces tens of thousands of blades per, there is a significant value in the present discovery of new and improved processes for the recovery of platinum from used aviation parts, including engine turbine blades.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the various embodiments without departing from their scope. While the dimensions and types of materials described herein are intended to define the parameters of the various embodiments, they are by no means limiting and are merely exemplary. Many other embodiments will be apparent to those of skill in the art upon reviewing the above description. The scope of the various embodiments should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, in the following claims, the terms "first," "second," and "third," etc. are used merely as labels, and are not intended to impose numerical requirements on their objects. It is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

All publications, patents, and patent applications mentioned herein are hereby incorporated by reference in their entirety as if each individual publication or patent was specifically and individually indicated to be incorporated by reference. In case of conflict, the present application, including any definitions herein, will control. While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the disclosure may include only some of the described embodiments. Accordingly, the invention is not to be seen as limited by the foregoing description, but is only limited by the scope of the appended claims.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the invention are indicated in the following clauses:
1. A method for recovering platinum from an gas engine component, said method comprising:
   contacting the engine component with a chemical comprising an acid;
   stripping the engine component, wherein said stripping comprises removing the thermal barrier control and platinum aluminide from the engine component;
   dissolving soluble metals out of the engine component;
   separating the thermal barrier control, platinum aluminide and soluble metals from the engine component;
   revealing a platinum-rich layer as part of the engine component;
   mechanically separating the platinum-rich layer from the engine component;
   centrifuging the platinum-rich layer; and
   recovering the platinum from the gas engine component.
2. The method of clause 1, wherein said gas engine component is a turbine blade.
3. The method of clause 1, wherein the separating the platinum-rich layer step is accomplished by high ultrasonic treatment of the component, tumbling of the component, dry ice blasting of the component, or a combination thereof.
4. The method of clause 1, wherein the separating the platinum-rich layer step is selected from the group consisting of hand brushing, high pressure water blasting, ultrasonic cleaning, vibratory finishing, or a combination thereof.
5. The method of clause 1, wherein the separating the platinum-rich layer step is accomplished by high ultrasonic treatment of the component for a period of at least 3 hours.
6. The method of clause 1, wherein the separating the platinum-rich layer step is accomplished by treatment of the component in an ultrasonic environment, and wherein the platinum-rich layer is dislodged from the component and a slurry is formed comprising the platinum-rich residue.
7. The method of clause 1, wherein the separating the platinum-rich layer step is accomplished by tumbling treatment of the component for a period of at least 45 minutes.
8. The method of clause 1, wherein the separating the platinum-rich layer step is accomplished by treatment of the component in a tumbling environment, and wherein the platinum-rich layer is dislodged from the component and a slurry is formed comprising the platinum-rich residue.
9. A method for recovering platinum from a gas engine component, said method comprising:
   contacting the engine component with a chemical comprising an acid;
   dissolving at least a portion of a thermal barrier coating and platinum aluminide on said engine component to expose a platinum rich layer;
   separating the platinum-containing layer from the thermal barrier coating and platinum aluminide;
   mechanically removing the platinum-containing layer from the engine component; and
   recovering the platinum from the platinum-containing layer by centrifugation.
10. The method of clause 9, wherein said gas engine component is a turbine blade.
11. The method of clause 9, wherein the mechanically removing step is accomplished by high ultrasonic treatment of the component, tumbling of the component, dry ice blasting of the component, or a combination thereof.
12. The method of clause 9, wherein the mechanically removing step is selected from the group consisting of hand brushing, high pressure water blasting, ultrasonic cleaning, vibratory finishing, or a combination thereof.
13. The method of clause 9, wherein the mechanically removing step is accomplished by high ultrasonic treatment of the component for a period of at least 3 hours.
14. The method of clause 9, wherein the mechanically removing step is accomplished by treatment of the component in an ultrasonic environment, and wherein the platinum-rich layer is dislodged from the component and a slurry is formed comprising the platinum-rich residue in water.
15. The method of clause 9, wherein the mechanically removing step is accomplished by tumbling treatment of the component for a period of at least 45 minutes.
16. The method of clause 9, wherein the mechanically removing step is accomplished by treatment of the component in a tumbling environment, and wherein the platinum-rich layer is dislodged from the component and a slurry is formed comprising the platinum-rich residue in water.
17. A method for recovering platinum from a turbine blade, said method comprising:
   dipping the turbine blade into a chemical comprising an acid;
   dissolving at least 50% of a thermal barrier coating or platinum aluminide on said turbine blade;
   exposing a platinum rich layer on said turbine blade;
   mechanically separating the platinum-rich layer from the turbine blade; and
   recovering the platinum from the platinum-rich layer by centrifugation.
18. The method of clause 17, wherein said gas engine component is a turbine blade.
19. The method of clause 17, wherein the separating the platinum-rich layer step is accomplished by high ultrasonic treatment of the component, tumbling of the component, dry ice blasting of the component, or a combination thereof.
20. The method of clause 17, wherein the separating the platinum-rich layer step is selected from the group consisting of hand brushing, high pressure water blasting, ultrasonic cleaning, vibratory finishing, or a combination thereof.
21. The method of clause 17, wherein the separating the platinum-rich layer step is accomplished by high ultrasonic treatment of the component for a period of at least 3 hours.
22. The method of clause 17, wherein the separating the platinum-rich layer step is accomplished by treatment of the component in an ultrasonic environment, and wherein the platinum-rich layer is dislodged from the component and a slurry is formed comprising the platinum-rich residue in water.
23. The method of clause 17, wherein the separating the platinum-rich layer step is accomplished by tumbling treatment of the component for a period of at least 45 minutes.
24. The method of clause 17, wherein the separating the platinum-rich layer step is accomplished by treatment of the component in a tumbling environment, and wherein the platinum-rich layer is dislodged from the component and a slurry is formed comprising the platinum-rich residue in water.

## Claims

1. A method for recovering platinum from an gas engine component, said method comprising:
contacting the engine component with a chemical comprising an acid;
stripping the engine component, wherein said stripping comprises removing a thermal barrier control and platinum aluminide from the engine component;
dissolving soluble metals out of the engine component;
separating the thermal barrier control, platinum aluminide and soluble metals from the engine component;
revealing a platinum-rich layer as part of the engine component;
mechanically separating the platinum-rich layer from the engine component;
centrifuging the platinum-rich layer; and
recovering the platinum from the gas engine component.

2. The method of claim 1, wherein said gas engine component is a turbine blade.

3. The method of either of claim 1 or 2, wherein the separating the platinum-rich layer step is accomplished by high ultrasonic treatment of the component, tumbling of the component, dry ice blasting of the component, or a combination thereof.

4. The method of either of claim 1 or 2, wherein the separating the platinum-rich layer step is selected from the group consisting of hand brushing, high pressure water blasting, ultrasonic cleaning, vibratory finishing, or a combination thereof.

5. The method of any preceding claim, wherein the separating the platinum-rich layer step is accomplished by high ultrasonic treatment of the component for a period of at least 3 hours.

6. The method of any preceding claim, wherein the separating the platinum-rich layer step is accomplished by treatment of the component in an ultrasonic environment, and wherein the platinum-rich layer is dislodged from the component and a slurry is formed comprising the platinum-rich residue.

7. The method of either of claim 1 or 2, wherein the separating the platinum-rich layer step is accomplished by tumbling treatment of the component for a period of at least 45 minutes.

8. The method of either of claim 1 or 2, wherein the separating the platinum-rich layer step is accomplished by treatment of the component in a tumbling environment, and wherein the platinum-rich layer is dislodged from the component and a slurry is formed comprising the platinum-rich residue.

9. A method for recovering platinum from a gas engine component, said method comprising:
contacting the engine component with a chemical comprising an acid;
dissolving at least a portion of a thermal barrier coating and platinum aluminide on said engine component to expose a platinum rich layer;
separating the platinum-containing layer from the thermal barrier coating and platinum aluminide;
mechanically removing the platinum-containing layer from the engine component; and
recovering the platinum from the platinum-containing layer by centrifugation.

10. The method of claim 9, wherein said gas engine component is a turbine blade.

11. The method of either of claim 9 or 10, wherein the mechanically removing step is accomplished by high ultrasonic treatment of the component, tumbling of the component, dry ice blasting of the component, or a combination thereof.

12. The method of either of claim 9 or 10, wherein the mechanically removing step is selected from the group consisting of hand brushing, high pressure water blasting, ultrasonic cleaning, vibratory finishing, or a combination thereof.

13. The method of any of claims 9 to 12, wherein the mechanically removing step is accomplished by high ultrasonic treatment of the component for a period of at least 3 hours.

14. The method of any of claims 9 to 13, wherein the mechanically removing step is accomplished by treatment of the component in an ultrasonic environment, and wherein the platinum-rich layer is dislodged from the component and a slurry is formed comprising the platinum-rich residue in water.

15. A method for recovering platinum from a turbine blade, said method comprising:
dipping the turbine blade into a chemical comprising an acid;
dissolving at least 50% of a thermal barrier coating or platinum aluminide on said turbine blade;
exposing a platinum rich layer on said turbine blade;
mechanically separating the platinum-rich layer from the turbine blade; and
recovering the platinum from the platinum-rich layer by centrifugation.
